# EUROPEAN PATENT SPECIFICATION

(11) **EP 4 147 899 B1**
(45) Date of publication and mention of the grant of the patent: **05.11.2025**
(21) Application number: 22195107.2
(22) Date of filing: 12.09.2022
(51) Int. Cl.: B60L 3/02, A61G 5/04, A61G 5/10, B60L 53/14, B60R 25/045, G07C 9/00

(54) **AN ELECTRICALLY POWERED MOBILITY VEHICLE**
ELEKTRISCH ANGETRIEBENES MOBILITÄTSFAHRZEUG
VÉHICULE DE MOBILITÉ À ALIMENTATION ÉLECTRIQUE

(30) Priority: 10.09.2021 GB 202112973
(43) Date of publication of application: 15.03.2023
(73) Proprietor: Medhurst, Neil Thomas, Dartford, Kent DA1 5HZ (GB)
(72) Inventor: Medhurst, Neil Thomas, Dartford, Kent DA1 5HZ (GB)
(74) Representative: Bridle, Andrew Barry

(56) References cited:
- EP-A1- 3 744 297
- WO-A1-2020/120963
- FR-A1- 2 978 716
- US-A1- 2008 135 321
- US-A1- 2014 167 915

## Description

The present invention relates to electrically powered mobility vehicles, such as electric mobility scooters, electric wheelchairs and the like, which include an immobiliser that may be used to prevent movement of the vehicle.

Powered mobility vehicles, such as electric mobility scooters and electric wheelchairs typically have a simple key-activated power system, such as a key-operated controller for the electric power source. However, the keys of such vehicles tend to be very unsophisticated and often manufacturers use a common key system such that any key is able to activate a number of vehicles within a given range of vehicles, sometimes even all of the vehicles within that range. This makes the vehicles easy to steal. Furthermore, an exposed key-operated lock is relatively easy to circumvent, which also makes the vehicle vulnerable to theft. Alternatively, certain powered mobility vehicles have no key-activated power systems and can simply be operated with no need for a key.

In addition to the security issues, users of mobility vehicles often have limited movement of their fingers, which makes operating a key difficult. Moreover, it is often difficult for certain users of mobility vehicles to coordinate locating the key in the lock and it is known for keys to be broken whilst in the lock, which can cause the vehicle to be stuck in the active or inactive configuration.

Furthermore, should a user become incapacitated whilst operating the vehicle, it is difficult to bring the vehicle safely to a stop if the vehicle uses a key-operated activation system.

Thus, conventional key-operated mobility vehicles are relatively easy to steal, can be difficult to operate and can pose a safety risk should the user become incapacitated while operating the vehicle.

Known keyless activations systems for mobility vehicles are described in EP 3335684 and EP 3744297. In these documents, the activation system includes a switch disposed between an electrical power source of the vehicle and a motor controller. In contrast, the immobiliser of the present invention is connected to a battery charging circuit of the vehicle.

FR2978716 discloses an immobiliser for a motorised vehicle and US2014/167915 discloses a charging system for an electrically-powered vehicle.

According to a first aspect of the invention, there is provided a system comprising an An electrically powered mobility vehicle including a keyless activation system and a remote operation transmitter, wherein the vehicle includes a rechargeable battery arrangement; a drive circuit which includes one or more electric motors; and a battery charging circuit which charges the rechargeable battery arrangement; as defined in the claims appended hereto.

The skilled person will appreciate that rechargeable vehicles are normally prevented from operating when a charging cable is connected to the battery charging circuit. Thus, the battery charging circuit includes an inhibit circuit, which prevents the operation of an operation controller in the event that the vehicle is being charged and/or is connected to a charging cable. Accordingly, the first condition of the battery charging circuit is activated when the charging cable sensor senses a charging cable is electrically connected to the battery charging circuit. In such cases, the inhibit circuit is activated and the operation controller is prevented from operating. The battery charging circuit includes a charging port and the sensor senses when a charging cable is electrically connected to the battery charging circuit via the charging port. For example, the charging port and the charging cable may include a positive terminal, a negative terminal and an inhibit terminal.

The present invention causes the battery charging circuit to "sense" that the battery is being charged, even if no charging cable is attached to the vehicle. As a result of this, operation of the vehicle is prevented by the battery charging circuit (e.g. by the inhibit circuit of the charging circuit). Thus, in the present invention, the immobiliser suitably activates an inhibit circuit of the battery charging circuit, which in turn prevents or inhibits the operation of an operation controller disposed between the rechargeable battery and the drive circuit.

Furthermore, the second condition of the battery charging circuit may be activated when the charging cable sensor senses that no charging cable is electrically connected to the battery charging circuit.

The immobiliser of the present invention is electrically connected to the battery charging circuit, for example to an inhibit circuit which forms a part of the battery charging circuit, and activates the first condition of the battery charging circuit, even if a charging cable is not electrically connected to the battery charging circuit. Thus, the immobiliser is able to change the condition of the battery charging circuit from the second condition to the first condition when no charging cable is connected to the battery charging circuit.

Optionally, the battery charging circuit maintains its first condition until it senses that the battery is not being charged and a second signal is received from the immobiliser. Thus, two steps are required to activate the second condition of the battery charging circuit.

It will be appreciated that the keyless activation system may replace a conventional key-operated power system or it may add an additional activation system to a vehicle. Such a system makes it more difficult to steal the vehicle, as the remote operation transmitter may be paired with the signal receiver of the control module such that only the unique transmitter which is paired to the control module is able to activate the vehicle. In certain embodiments, the transmitter transmits a coded signal and the signal receiver detects if the received signal includes the correct code. The signal receiver may only send a corresponding control signal to the immobiliser if the correct code is received.

Furthermore, the remote operation transmitter is easier for a user to operate, as it may require a simple press of a button, which may be relatively large and easy to press, or it may simply need to be within a pre-defined distance from the signal receiver, such that no further operation of the transmitter is required.

Additionally, the transmitter may be in possession of a carer or supervisor, such that the vehicle may be remotely deactivated or shut-off in the event of the user becoming incapacitated.

The transmitter suitably transmits an activation signal to the signal receiver and the signal receiver transmits a corresponding control signal to the immobiliser in response to the activation signal.

As noted above, the transmitter may transmit a coded signal and the signal receiver may detect the coded signal and determine if the transmitter is an authorised transmitter. Thus, the signal receiver may compare the received code with a database which stores one or more authorised codes.

In an embodiment of the invention, the powered mobility vehicle includes a visual indicator connected to an electrical output of the control module and the visual indicator indicates the configuration of the immobiliser. The visual indicator may be a light emitting element, such as an LED, which is configured to emit a light when the immobiliser is active and the battery charging circuit is in its first condition.

The remote operation transmitter may include at least one button that is pushed by a user to transmit an activation signal to the signal receiver. Thus, a physical operation by the user is required to activate the drive circuit of the vehicle (i.e. place the battery charging circuit in its second condition). The remote operation transmitter may further include at least one second button that transmits a deactivation signal and the signal receiver sends a control signal to the immobiliser to activate the first condition of the battery charging circuit.

Alternatively, the transmitter may operate on a proximity principle. In such an embodiment, the transmitter includes a radio transponder which transmits an activation signal and which is paired with the signal receiver such that when transmitter is less than a pre-defined distance from the signal receiver, the signal receiver detects the activation signal transmitted by the transmitter and transmits the appropriate control signal to the immobiliser in response to the transmitted activation signal. In such an embodiment, no physical operation of the transmitter is required. The user simply has to be close enough to the vehicle with the transmitter for the vehicle's drive circuit to be powered by the rechargeable battery.

In such an embodiment, the radio transponder may transmit the activation signal in response to a pairing signal emitted by the signal receiver.

The powered mobility vehicle may be an electrically operated mobility vehicle, such as an electric mobility scooter or an electrically powered wheelchair.

It will be appreciated that the keyless activation system may be fitted to an electrically powered mobility vehicle when the vehicle is assembled or it may be retro-fitted to an existing vehicle that includes a battery charging circuit.

The skilled person will appreciate that the terms "electrically connected", "connected" and similar terms as used herein in the context of the subject invention include both direct connections and indirect connections via intermediate components. Thus, if component A is electrically connected to component B, they may be directly connected or they may be connected via one or more intermediate components C.

The skilled person will appreciate that the features described and defined in connection with the aspect of the invention and the embodiments thereof may be combined in any combination, regardless of whether the specific combination is expressly mentioned herein. Thus, combinations of optional features described and discussed herein are within the scope of the invention.

An embodiment of the invention will now be described, by way of example only, with reference to the accompanying drawings in which:

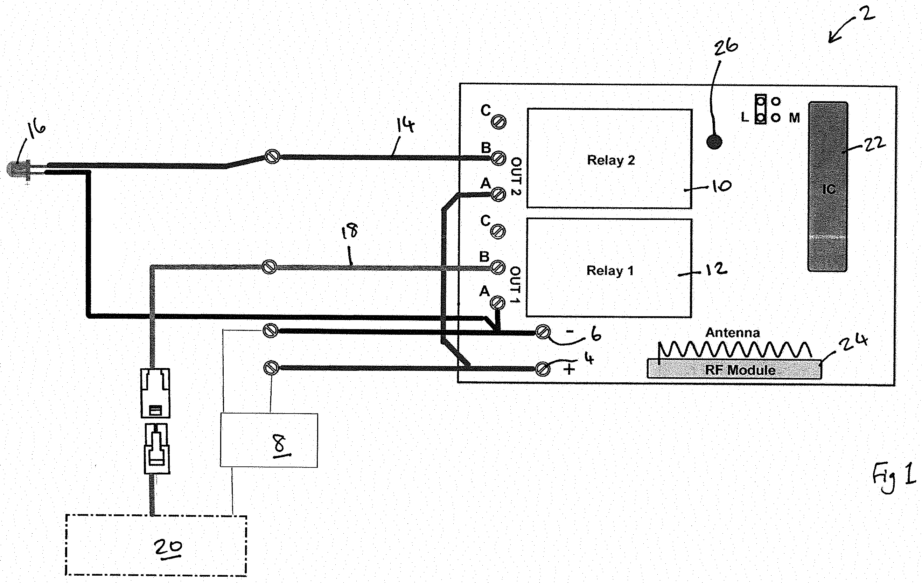

Figure 1 is a schematic representation of a control module of a keyless activation system according to the invention. The invention is defined in the appended claims.

For the avoidance of doubt, the skilled person will appreciate that in this specification, the terms "up", "down", "front", "rear", "upper", "lower", "width", "above", "below", etc. refer to the orientation of the components of the invention when installed for normal use as shown in the Figure.

Figure 1 shows schematically a control module 2 which may be fitted to an electrically powered mobility vehicle (not shown).

The control module 2 includes an electrical power input 4, 6 which is connected to a 24V DC electrical power supply 8 which powers the mobility vehicle. The power supply 8 is in the form of a 24V rechargeable battery system (shown schematically).

Two relay switches 10, 12 are provided in the control module 2. The first relay switch 10 has an electrical output 14 which is connected to an LED light 16, and the second relay switch 12 has an electrical output 18, which is electrically connected to a charging circuit 20 of the mobility vehicle, which in turn is electrically connected to the rechargeable battery 8.

When the first relay switch 10, is activated, the second relay switch 12 is inactivated. In this configuration, electrical power from the electrical power input 4, 6 of the control module 2 is connected to the LED light 16, and, in addition, no electrical signal from the second relay 12 is transmitted to the charging circuit 20. In this configuration, the LED light is illuminated to indicate that the immobiliser has been disabled and the charging circuit will permit power to be transmitted to one or more motor controller(s) (not shown), assuming that no charging cable is connected to a charging port (not shown) that forms part of the charging circuit. When the first relay switch 10 is in an inactive configuration, the LED light 16 is isolated from the electrical power input 4, 6 of the control module 2, and the second relay switch 12 is activated such that an electrical signal is sent from the second relay switch 12 to the charging circuit 20. In this configuration, the charging circuit is placed in a condition corresponding to the condition when a charging cable is connected to the charging port and the or each motor controller is isolated from the rechargeable battery 8. It will be appreciated that in this configuration, the LED light is not illuminated and the immobiliser is active.

The first and second relay switches 10, 12 are controlled by control signals from an integrated circuit 22. The integrated circuit 22 receives inputs from a radio frequency receiver 24, compares the signal received by the receiver 24 to data stored on a memory to confirm that the signal is an authorised signal and then outputs a corresponding control signal to each of the relay switches 10, 12.

A remotely operated radio transmitter (not shown) is then paired with the control module 2 via a programming button 26. The pairing of a remote transmitter with a radio frequency receiver is well known and will not be described in further detail herein. Once paired, the integrated circuit 22 is able to recognise the coded radio signal transmitted by the remote transmitter as an authorised signal and configures the relay switches 10, 12 accordingly.

In this embodiment, the remotely operated radio transmitter includes a first button which switches on (i.e. activates) the mobility vehicle and a second button which switches off (i.e. disables) the mobility vehicle. Thus, when the first button is pressed, a first signal is transmitted by the transmitter and received by the radio frequency receiver 24. The radio frequency receiver 24 sends a first signal to the integrated circuit 22 which corresponds to the received signal and the integrated circuit 22 compares the received signal to the authorised signals that were stored in its memory during the pairing process. If the received signal is determined by the integrated circuit 22 to be an authorised "on" signal, the integrated circuit 22 sends control signals to the first and second relay switches 10, 12 which configures the first relay switch 10 in its active configuration and the second relay switch in its inactive configuration, wherein the charging circuit 20 permits electrical power to be transmitted to the or each motor controller and the LED light is illuminated.

When the second button is pressed, a second signal is transmitted by the transmitter and received by the radio frequency receiver 24. The radio frequency receiver 24 sends a second signal to the integrated circuit 22 which corresponds to the received second signal and the integrated circuit 22 compares the received second signal to the authorised signals that were stored in its memory during the pairing process. If the received second signal is determined by the integrated circuit 22 to be an authorised "off" signal, the integrated circuit 22 sends corresponding control signals to the first and second relay switches 10, 12. In this situation, the first relay switch 10 isolates the LED light from the electrical power input 4, 6 of the control module 2 and the second relay switch transmits an electrical signal to the charging circuit 20, which in turn isolates the or each motor controller from the rechargeable battery 8.

The skilled person will appreciate that the control module 2 may instead be configured to detect automatically the remote transmitter when it is in range of the signal receiver 24. Thus, the control module includes a wireless signal transceiver that transmits periodically a pairing signal. When the remotely operated radio transmitter receives the pairing signal, it transmits a corresponding pairing signal. The radio frequency receiver 24 sends data relating to the received pairing signal to the integrated circuit 22 and the integrated circuit 22 compares the received pairing signal to the authorised signals that were stored in its memory during the pairing process. In this embodiment, when the remote transmitter is within range of the pairing signal transmitted by the signal transceiver of the control module 2, the first relay switch 10 is configured in its active configuration and the second relay switch 12 is configured in its inactive configuration, wherein immobiliser is inactivated (i.e. the charging circuit 20 permits electrical power to be transmitted to the or each motor controller and the LED light is illuminated). When the remote transmitter is out of range of the pairing signal transmitted by the signal transceiver of the control module 2, the first relay switch 10 is configured in its inactive configuration and the second relay switch 12 is configured in its active configuration, wherein immobiliser is activated (i.e. the charging circuit 20 prevents electrical power being transmitted to the or each motor controller and the LED light is extinguished).

It will be appreciated that the LED light may function in the reverse. In other words, the LED light may be illuminated when the immobiliser is active and power is prevented from being transmitted to the or each motor controller and may be extinguished when the immobiliser is inactive and power is permitted to be transmitted from the rechargeable battery 8 to the or each motor controller.

The skilled person will further appreciate that the invention may relate to a kit for retro-fitting of the keyless activation system to an existing mobility vehicle, or the invention may relate to a powered mobility vehicle in which the keyless activation system is installed as part of the original equipment at manufacture. The keyless activation system may be fitted to a vehicle which includes a separate key-operated activation system or it may replace a key-operated activation system.

## Claims

1. A system comprising an electrically powered mobility vehicle including a keyless activation system and a remote operation transmitter, wherein the vehicle includes a rechargeable battery arrangement (8); a drive circuit which includes one or more electric motors; and a battery charging circuit (20) which is configured to charge the rechargeable battery arrangement (8), wherein the battery charging circuit (20) has a first condition wherein power output from the rechargeable battery to the drive circuit is prevented, and a second condition where power output from the rechargeable battery to the drive circuit is permitted; wherein the keyless activation system includes a control module (2) carried by the vehicle, wherein the control module (2) includes an immobiliser connected to the battery charging circuit, the immobiliser having a first configuration in which a first electrical signal is sent to the battery charging circuit which activates the first condition of the battery charging circuit, and a second configuration in which a second electrical signal is sent to the battery charging circuit which activates the second condition of the battery charging circuit if the battery is not being charged; and a signal receiver (24) electrically connected to the immobiliser, wherein the signal receiver (24) is wirelessly coupled to the remote operation transmitter and the signal receiver (24) is configured to control the immobiliser in accordance with signals received from the remote operation transmitter; wherein the battery charging circuit (20) includes a charge cable port and a charge cable sensor which is configured to sense when a charge cable is connected to the charge cable port; and wherein the charge cable sensor has a first condition when a charge cable is connected to the charge cable port and a second condition when no charge cable is connected to the charge cable port; and wherein the immobiliser is connected to the charge cable sensor and is configured to activate the first condition of the charge cable sensor when the immobiliser is in its first configuration.

2. A system according to Claim 1, wherein the second electrical signal includes an absence of an electrical signal.

3. A system according to Claim 1 or Claim 2, wherein the charging circuit includes an inhibit circuit and the inhibit circuit is configured to inhibit the operation of an operation controller disposed between the rechargeable battery and the drive circuit when the charge cable sensor is in its first condition.

4. A system according to any of Claims 1 to 3, wherein the second condition of the battery charging circuit is activated when the charging cable sensor senses that no charging cable is electrically connected to the battery charging circuit and the immobiliser is in its second configuration; and the charging circuit is configured to permit electrical power being transmitted to the drive circuit from the rechargeable battery when the charge cable sensor is in its second condition.

5. A system according to any of Claims 1 to 4, wherein the remote operation transmitter includes at least one button that is pushed by a user to transmit an activation signal to the signal receiver; and the activation signal activates the first configuration of the immobiliser.

6. A system according to Claim 5, wherein the remote operation transmitter includes at least one second button that is configured to transmit a deactivation signal and the signal receiver; and the deactivation signal activates the second configuration of the immobiliser.

7. A system according to any of Claims 1 to 4, wherein the transmitter includes a radio transponder which is configured to transmit an activation signal and which is paired with the signal receiver such that when transmitter is less than a pre-defined distance from the signal receiver, the signal receiver is configured to detect the activation signal transmitted by the transmitter and to activate the second configuration of the immobiliser in response to the transmitted activation signal.

8. A system according to Claim 7, wherein the radio transponder is capable of transmitting the activation signal in response to a pairing signal emitted by the signal receiver.

9. A system according to Claim 7 or Claim 8, wherein the immobiliser is configured in its first configuration when the signal receiver is out of range of the activation signal.

10. A system according to any of Claims 1 to 9, wherein the vehicle includes a visual indicator (16) connected to the control module and the visual indicator (16) is configured to indicate the configuration of the immobiliser.

11. A system according to Claim 10, wherein the visual indicator (16) is a light emitting element, and wherein the light emitting element is configured to emit a light when the immobiliser is in its second configuration.

## Patentansprüche

1. System, das ein elektrisch angetriebenes Mobilitätsfahrzeug mit einem schlüssellosen Aktivierungssystem und einem Fernbedienungssender umfasst, wobei das Fahrzeug eine wiederaufladbare Batterieanordnung (8); eine Antriebsschaltung, die einen oder mehrere Elektromotoren beinhaltet; und eine zum Laden der wiederaufladbaren Batterieanordnung (8) konfigurierte Batterieladeschaltung (20) umfasst,
wobei die Batterieladeschaltung (20) einen ersten Zustand, in dem Leistungsabgabe von der wiederaufladbaren Batterie an die Antriebsschaltung verhindert wird, und einen zweiten Zustand hat, in dem die Leistungsabgabe von der wiederaufladbaren Batterie an die Antriebsschaltung zugelassen wird; wobei das schlüssellose Aktivierungssystem Folgendes beinhaltet: ein auf dem Fahrzeug befindliches Steuermodul (2), wobei das Steuermodul (2) eine mit der Batterieladeschaltung verbundene Wegfahrsperre beinhaltet, wobei die Wegfahrsperre eine erste Konfiguration, in der ein den ersten Zustand der Batterieladeschaltung aktivierendes erstes elektrisches Signal zur Batterieladeschaltung gesendet wird, und eine zweite Konfiguration hat, in der ein den zweiten Zustand der Batterieladeschaltung aktivierendes zweites elektrisches Signal zur Batterieladeschaltung gesendet wird, wenn die Batterie nicht geladen wird; und einen elektrisch mit der Wegfahrsperre verbundenen Signalempfänger (24), wobei der Signalempfänger (24) drahtlos mit dem Fernbedienungssender gekoppelt ist und der Signalempfänger (24) zum Steuern der Wegfahrsperre gemäß vom Fernbedienungssender empfangenen Signalen konfiguriert ist; wobei die Batterieladeschaltung (20) einen Ladekabelanschluss und einen Ladekabelsensor beinhaltet, konfiguriert zum Erfassen, wenn ein Ladekabel an den Ladekabelanschluss angeschlossen ist; und wobei der Ladekabelsensor einen ersten Zustand hat, wenn ein Ladekabel an den Ladekabelanschluss angeschlossen ist, und einen zweiten Zustand, wenn kein Ladekabel an den Ladekabelanschluss angeschlossen ist; und wobei die Wegfahrsperre mit dem Ladekabelsensor verbunden und zum Aktivieren des ersten Zustands des Ladekabelsensors konfiguriert ist, wenn die Wegfahrsperre in ihrer ersten Konfiguration ist.

2. System nach Anspruch 1, wobei das zweite elektrische Signal das Fehlen eines elektrischen Signals umfasst.

3. System nach Anspruch 1 oder Anspruch 2, wobei die Ladeschaltung eine Sperrschaltung beinhaltet und die Sperrschaltung zum Sperren des Betriebs einer zwischen der wiederaufladbaren Batterie und der Antriebsschaltung angeordneten Betriebssteuerung konfiguriert ist, wenn der Ladekabelsensor in seinem ersten Zustand ist.

4. System nach einem der Ansprüche 1 bis 3, wobei der zweite Zustand der Batterieladeschaltung aktiviert wird, wenn der Ladekabelsensor erfasst, dass kein Ladekabel elektrisch mit der Batterieladeschaltung verbunden ist und die Wegfahrsperre in ihrer zweiten Konfiguration ist; und die Ladeschaltung konfiguriert ist zum Zulassen, dass elektrischer Strom von der wiederaufladbaren Batterie zur Antriebsschaltung übertragen wird, wenn der Ladekabelsensor in seinem zweiten Zustand ist.

5. System nach einem der Ansprüche 1 bis 4, wobei der Fernbedienungssender mindestens eine Taste aufweist, die von einem Benutzer gedrückt wird, um ein Aktivierungssignal zum Signalempfänger zu senden; und das Aktivierungssignal die erste Konfiguration der Wegfahrsperre aktiviert.

6. System nach Anspruch 5, wobei der Fernbedienungssender mindestens eine zweite Taste aufweist, die zum Senden eines Deaktivierungssignals zum Signalempfänger konfiguriert ist; und das Deaktivierungssignal die zweite Konfiguration der Wegfahrsperre aktiviert.

7. System nach einem der Ansprüche 1 bis 4, wobei der Sender einen Funk-Transponder umfasst, der zum Senden eines Aktivierungssignals konfiguriert und mit dem Signalempfänger verpaart ist, so dass, wenn sich der Sender in einer geringeren als einer vordefinierten Entfernung vom Signalempfänger befindet, der Signalempfänger zum Erkennen des vom Sender übertragenen Aktivierungssignals und zum Aktivieren der zweiten Konfiguration der Wegfahrsperre als Reaktion auf das übertragene Aktivierungssignal konfiguriert ist.

8. System nach Anspruch 7, wobei der Funk-Transponder das Aktivierungssignal als Reaktion auf ein vom Signalempfänger ausgesendetes Verpaarungssignal senden kann.

9. System gemäß Anspruch 7 oder Anspruch 8, wobei die Wegfahrsperre in ihrer ersten Konfiguration konfiguriert ist, wenn der Signalempfänger außerhalb der Reichweite des Aktivierungssignals ist.

10. System nach einem der Ansprüche 1 bis 9, wobei das Fahrzeug eine mit dem Steuermodul verbundene visuelle Anzeige (16) aufweist und die visuelle Anzeige (16) zum Anzeigen der Konfiguration der Wegfahrsperre konfiguriert ist.

11. System nach Anspruch 10, wobei die visuelle Anzeige (16) ein lichtemittierendes Element ist und wobei das lichtemittierende Element zum Emittieren von Licht konfiguriert ist, wenn die Wegfahrsperre in ihrer zweiten Konfiguration ist.

## Revendications

1. Un système comprenant un véhicule de mobilité à alimentation électrique comprenant un système d'activation sans clé et un émetteur de commande à distance, le véhicule comportant un agencement de batterie rechargeable (8) ; un circuit de commande qui comprend un ou plusieurs moteurs électriques ; et un circuit de charge de batterie (20) configuré pour charger l'agencement de batterie rechargeable (8), le circuit de charge de batterie (20) ayant une première condition dans laquelle la sortie de puissance depuis la batterie rechargeable jusqu'au circuit de commande est interdit, et une deuxième condition dans laquelle la sortie de puissance depuis la batterie rechargeable jusqu'au circuit de commande est autorisé ; le système d'activation sans clé comportant un module de commande (2) porté par le véhicule, le module de commande (2) comprenant un dispositif d'immobilisation connecté au circuit de charge de batterie, le dispositif d'immobilisation ayant une première configuration dans laquelle un premier signal électrique est envoyé au circuit de charge de batterie qui active la première condition du circuit de charge de batterie, et une deuxième configuration dans laquelle un deuxième signal électrique est envoyé au circuit de charge de batterie qui actionne la deuxième condition du circuit de charge de batterie si la batterie n'est pas en train d'être chargée ; et un récepteur de signal (24) connecté électriquement au dispositif d'immobilisation, le récepteur de signal (24) étant couplé sans fil à l'émetteur de commande à distance et le récepteur de signal (24) étant configuré pour commander le dispositif d'immobilisation conformément aux signaux reçus de l'émetteur de commande à distance ; le circuit de charge de batterie (20) comprenant un port de câble de charge et un capteur de câble de charge qui est configuré pour détecter quand un câble de charge est connecté au port de charge de câble ; le capteur de câble de charge ayant une première condition quand un câble de charge est connecté au port de câble de charge et une deuxième condition quand aucun câble de charge n'est connecté au port de câble de charge ; et le dispositif d'immobilisation étant connecté au capteur de câble de charge et étant configuré pour activer la première condition du capteur de câble de charge quand le dispositif d'immobilisation est dans sa première configuration.

2. Un système selon la revendication 1, dans lequel le deuxième signal électrique comporte une absence de signal électrique.

3. Un système selon la revendication 1 ou la revendication 2, dans lequel le circuit de charge comprend un circuit d'inhibition et le circuit d'inhibition est configuré pour empêcher le fonctionnement d'une commande de fonctionnement disposée entre la batterie rechargeable et le circuit de commande quand le capteur de câble de charge est dans sa première condition.

4. Un système selon une quelconque des revendications 1 à 3, dans lequel la deuxième condition du circuit de charge de batterie est activée quand le capteur de câble de charge détecte qu'aucun câble de charge n'est connecté électriquement au circuit de charge de batterie et le dispositif d'immobilisation est dans sa deuxième configuration ; et le circuit de charge est configuré pour autoriser à l'alimentation électrique d'être transmise au circuit de commande depuis la batterie rechargeable quand le capteur de câble de charge est dans sa deuxième condition.

5. Un système selon une quelconque des revendications 1 à 4, dans lequel l'émetteur de commande à distance comprend au moins un bouton qui est poussé par un utilisateur pour émettre un signal d'activation au récepteur de signal ; le signal d'activation actionnant la première configuration du dispositif d'immobilisation.

6. Un système selon la revendication 5, dans lequel l'émetteur de commande à distance comprend au moins un deuxième bouton qui est configuré pour émettre un signal de désactivation et le récepteur de signal ; le signal de désactivation actionnant la deuxième configuration du dispositif d'immobilisation.

7. Un système selon une quelconque des revendications 1 à 4, dans lequel l'émetteur comprend un transpondeur radio configuré pour émettre un signal d'activation et apparié au récepteur de signal de manière à ce que, quand l'émetteur est à moins d'une distance prédéfinie du récepteur de signal, le récepteur de signal est configuré pour détecter le signal d'activation émis par l'émetteur et pour activer la deuxième configuration du dispositif d'immobilisation en réponse au signal d'activation émis.

8. Un système selon la revendication 7, dans lequel le transpondeur radio est capable d'émettre le signal d'activation en réponse à un signal d'appariement émis par le récepteur de signal.

9. Un système selon la revendication 7 ou la revendication 8, dans lequel le dispositif d'immobilisation est configuré dans sa première configuration quand le récepteur de signal est hors de portée du signal d'activation.

10. Un système selon une quelconque des revendications 1 à 9, dans lequel le véhicule comprend un indicateur visuel (16) connecté au module de commande, l'indicateur visuel (16) étant configuré pour indiquer la configuration du dispositif d'immobilisation.

11. Un système selon la revendication 10, dans lequel l'indicateur visuel (16) est un élément luminescent, l'élément luminescent étant configuré pour émettre une lumière quand le dispositif d'immobilisation est dans sa deuxième configuration.
